# EUROPÄISCHE PATENTSCHRIFT

(11) **EP 0 847 506 B1**
(45) Veröffentlichungstag und Bekanntmachung des Hinweises auf die Patenterteilung: **11.09.2002**
(21) Anmeldenummer: 96928385.2
(22) Anmeldetag: 27.07.1996
(51) Int. Cl.: F16D 65/02

(54) **SCHEIBENBREMSE UND POSITIONIERUNGS- UND TRANSPORTVORRICHTUNG FÜR EINE SCHEIBENBREMSE**
DISK BRAKE AND POSITIONING AND TRANSPORT DEVICE FOR A DISK BRAKE
FREIN A DISQUE ET DISPOSITIF DE TRANSPORT ET DE POSITIONNEMENT POUR UN FREIN A DISQUE

(30) Priorität: 31.08.1995 DE 19532080
(43) Veröffentlichungstag der Anmeldung: 17.06.1998
(73) Patentinhaber: Continental Teves AG & Co. oHG, 60488 Frankfurt (DE)
(72) Erfinder: SCHIEL, Wolfgang, D-65936 Frankfurt am Main (DE)
(86) Internationale Anmeldenummer: EP9603319
(87) Internationale Veröffentlichungsnummer: WO97008474

(56) Entgegenhaltungen:
- US-A- 4 331 221
- US-A- 4 753 326

## Beschreibung

Die Erfindung betrifft eine Scheibenbremse sowie Positionierungs- und Transport-Sicherungsvorrichtung für eine Scheibenbremse, wobei die Scheibenbremse zumindest einen Führungsbolzen mit einem Gewindeabschnitt, der in einer Durchgangsöffnung des Bremsgehäuses verschiebbar angeordnet ist, aufweist, und mit dem das Bremsgehäuse am Achsschenkel eines Fahrzeugs befestigbar ist.

Eine derartige Scheibenbremse ist z. B. aus der DE 42 03 318 A1 bekannt. Bei dieser Scheibenbremse ist in einer Bohrung des Bremsgehäuses eine Dämpfungshülse aus Gummi eingesetzt, in der der Führungsbolzen gleitbar angeordnet ist. Die Dämpfungshülse weist einen aus der Bohrung herausragenden Abschnitt auf, der das über die Bohrung hervorstehende freie Ende des Führungsbolzens im eingebauten Zustand abdeckt. Im nicht eingebauten Zustand des Bremsgehäuses ist der Führungsbolzen relativ zur Dämpfungshülse so angeordnet, daß der Gewindeabschnitt des Führungsbolzens sich innerhalb der Dämpfungshülse befindet, wodurch das freie Ende des Führungsbolzens über die Dämpfungshülse herausragt. Beim Transport des Bremsgehäuses verschiebt sich der Führungsbolzen leicht innerhalb der Dämpfungshülse, wodurch es zu Montageproblemen kommen kann und/oder das Gewinde beschädigt wird.

Der US-A-4 331 221 ist außerdem eine Scheibenbremse mit einer Bolzenführung zu entnehmen, bei der der Führungsbolzen ebenfalls mittels einer Dämpfungshülse innerhalb einer Gehäusebohrung gelagert ist. Zur Verbesserung der Gleiteigenschaften ist ferner eine den Führungsbolzen umgebende Gleithülse vorgesehen. Die Gleithülse reduziert die Reibung zwischen Führungsbolzen und Dämpfungshülse und sorgt für eine leichtgängige Bolzenführung. Beim Transport einer derartigen Scheibenbremse im vormontierten Zustand bzw. während ihrer Endmontage können aber nach wie vor die oben genannten Probleme auftreten. Montagefehler werden demzufolge nicht sicher ausgeschlossen.

Der Erfindung liegt daher die Aufgabe zugrunde, eine Scheibenbremse und eine Positionierungs- und Transport-Sicherungsvorrichtung für eine Scheibenbremse zu schaffen, bei der solche Probleme weitestgehend vermieden sind.

Diese Aufgabe wird erfindungsgemäß dadurch gelöst, daß auf dem Führungsbolzen eine Hülse derart angeordnet ist, daß der Führungsbolzen relativ zur Bohrung im Bremsgehäuse fixiert ist. Mit dieser Lösung wird auf überraschend einfache Weise erreicht, daß das Führungsbolzengewinde nicht aus der Dämpfungshülse ragt, d.h. bündig bzw. nach innen positioniert ist. Dadurch wird vermieden, daß das Gewinde bei der Montage auf den Achsschenkel beschädigt wird und es wird erreicht, daß das Bremsgehäuse problemlos über Scheibe und Achsschenkel gesetzt werden kann. Außerdem schützt die Hülse den hinten überstehenden Abschnitt des Führungsbolzens beim Transport. Ohne eine derartige Hülse hat der Führungsbolzen keinen festen Halt, kann wackeln, sich verschieben und ggf. verloren gehen.

Gemäß einer vorteilhaften Weiterbildung der Erfindung ist vorgesehen, daß die zwischen dem Führungsbolzen und der Dämpfungshülse angeordnete Hülse sich mit einem ihrer Enden an einem Vorsprung der Dämpfungshülse abstützt.

Die Länge der Hülse ist zweckmäßig so bemessen, daß sie den aus der Dämpfungshülse herausragenden Abschnitt des Führungsbolzens vollständig abdeckt.

Als Material für die Führungshülse kommen zweckmäßig Pappe oder Kunststoff in Frage.

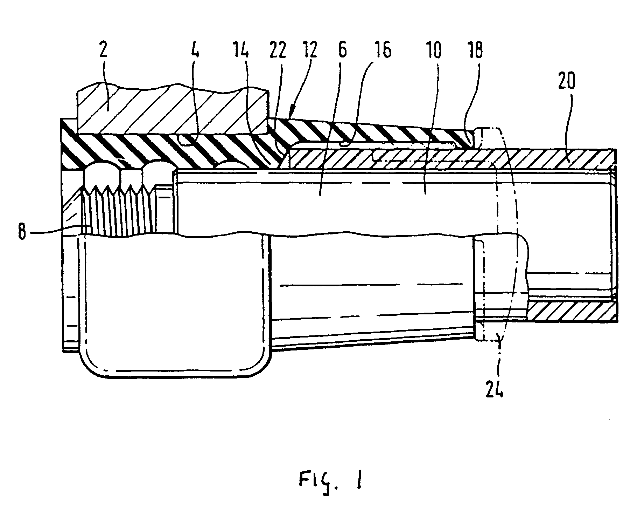

Ein Ausführungsbeispiel der Erfindung ist in der einzigen Figur der Zeichnung dargestellt und im folgenden beschrieben.

Die Zeichnung zeigt nur den Teil des Bremsgehäuses 2, der die Bohrung 4 zur Aufnahme des Führungsbolzens 6 bildet. Der Führungsbolzen 6 weist einen Gewindeabschnitt 8 und einen Gleitabschnitt 10 mit vergrößertem Durchmesser auf. In der Bohrung 4 sitzt eine Dämpfungshülse 12, wobei ein Teil der Dämpfungshülse 12 aus der Bohrung hervorragt. Die Dämpfungshülse 12 weist vier umlaufende innere Rippen auf, die im wesentlichen im Bereich der Bohrung 4 angeordnet sind und deren eine mit 14 bezeichnet ist. Angrenzend an die mit 14 bezeichnete Rippe bildet die Dämpfungshülse 12 eine innere Erweiterung 16. Am Ende der Dämpfungshülse 12 ist eine weitere umlaufende Rippe 18 vorgesehen.

Die Zeichnung zeigt den Führungsbolzen 6 bezüglich der Dämpfungshülse 12 in der Transportposition bzw. der Position vor der Montage. In dieser Position ist der Führungsbolzen 6 gegenüber der Dämpfungshülse 12 so verschoben, daß sich der Gewindeabschnitt 8 innerhalb der Dämpfungshülse 12 befindet, wohingegen das freie Ende des Führungsbolzens 6 aus der Dämpfungshülse 12 hervorragt. Auf dem freien Ende des Führungsbolzens 6 sitzt eine Hülse 20, deren Innendurchmesser so bemessen ist, daß zwischen dem Führungsbolzen und der Hülse ein Reibschluß besteht, so daß die Hülse 20 gegenüber dem Führungsbolzen 6 nicht ohne weiteres verschiebbar ist. Die Hülse 20 liegt mit ihrem inneren Ende an einem Absatz 22 der Dämpfungshülse 12 an, so daß die aus Führungsbolzen 6 und Hülse 20 bestehende Einheit bei einer Bewegung über diesen Absatz hinaus gehindert ist. Der Außendurchmesser der Hülse 20 ist so bemessen, daß die Rippe 18 mit Vorspannung auf der Hülse 20 sitzt, so daß durch die dadurch auftretende Reibung auch eine Bewegung in der entgegengesetzten Richtung nur unter Überwindung dieser Reibung möglich ist. Die Länge der Hülse 20 ist so bemessen, daß sie das in dieser Position aus der Dämpfungshülse 12 herausragende Ende des Führungsbolzens 6 vollständig abdeckt.

Bei der Montage wird wie folgt vorgegangen. Es wird zunächst die Dämpfungshülse 12 in das Bremsgehäuse 2 eingesetzt. Anschließend wird die Hülse 20 in die Dämpfungshülse 12 eingesetzt und der Führungsbolzen 6 wird in die Dämpfungshülse 12 eingeführt, bis er mit der Hülse 20 bündig abschließt. Bei der Montage der Bremse wird der Führungsbolzen 6 am Achsschenkel des Fahrzeugs verschraubt. Danach kann die Hülse 20 entfernt werden und ein Schutzstopfen 24 wird zum Verschluß der Dämpfungshülse 12 eingesetzt.

### Bezugszeichenliste

- 2: Bremsgehäuse
- 4: Bohrung
- 6: Führungsbolzen
- 8: Gewindeabschnitt
- 10: Gleitabschnitt
- 12: Dämpfungshülse
- 14: Rippe
- 16: Erweiterung
- 18: Rippe
- 20: Hülse
- 22: Absatz
- 24: Schutzstopfen

## Patentansprüche

1. Positionierungs- und Transport-Sicherungsvorrichtung für eine Bolzenführung einer Scheibenbremse, die zumindest einen Führungsbolzen (6) mit einem Gewindeabschnitt (8) aufweist, der durch eine Durchgangsöffnung (4) im Bremsgehäuse (2) geführt und mit seinem Gewindeabschnitt (8) am Achsschenkel eines Fahrzeugs befestigbar ist, wobei zwischen Führungsbolzen (6) und Durchgangsöffnung (4) eine Dämpfungshülse (12) angeordnet ist, **dadurch gekennzeichnet, daß** auf dem Führungsbolzen (6) eine Hülse (20) unter Reibschluß derart angeordnet ist, daß der Führungsbolzen (6) relativ zur Durchgangsöffnung (4) im Bremsgehäuse (2) fixiert ist.

2. Positionierungs- und Transport-Sicherungsvorrichtung nach Anspruch 1, **dadurch gekennzeichnet, daß** die zwischen dem Führungsbolzen (6) und der Dämpfungshülse (12) angeordnete Hülse (20) sich mit einem ihrer Enden an einem Absatz (22) der Dämpfungshülse (12) abstützt.

3. Positionierungs- und Transport-Sicherungsvorrichtung nach einem der Ansprüche 1 oder 2, **dadurch gekennzeichnet, daß** die Länge der Hülse (20) so bemessen ist, daß sie den aus der Dämpfungshülse (12) herausragenden Abschnitt des Führungsbolzens (6) vollständig abdeckt.

4. Positionierungs- und Transport-Sicherungsvorrichtung nach einem der vorhergehenden Ansprüche, **dadurch gekennzeichnet, daß** die Hülse (20) aus Pappe oder Kunststoff besteht.

## Claims

1. Positioning and transport device for a pin guide of a disc brake, including at least one guide pin (6) with a threaded portion (8), the guide pin being guided through a through-bore (4) in the brake housing (2) and being adapted to be attached by its threaded portion (8) to the steering knuckle of a vehicle, wherein a damping sleeve (12) is arranged between the guide pin (6) and the through-bore (4),
**characterised in that** a sleeve (20) is arranged on the guide pin (6) in frictional engagement therewith so that the guide pin (6) is fixed in relation to the through-bore (4) in the brake housing (2).

2. Positioning and transport device for a disc brake as claimed in claim 1,
**characterised in that** the sleeve (20) interposed between the guide pin (6) and the damping sleeve (12) is supported with one of its ends on a step (22) of the damping sleeve (12).

3. Positioning and transport device as claimed in any one of claims 1 or 2,
**characterised in that** the length of the sleeve (20) is dimensioned so that it completely covers the portion of the guide pin (6) which projects from the damping sleeve (12).

4. Positioning and transport device as claimed in any one of the preceding claims,
**characterised in that** the sleeve (20) is made of cardboard or plastic material.

## Revendications

1. Mécanisme à retenue de positionnement et de transport pour un guide de cheville d'un frein à disque, comportant au moins une broche-guide (6) prévue d'une section de fileté (8) guidée à travers d'une ouverture de passage (4) ménagée dans le bâti de frein (2) et fixable avec sa section de fileté (8) à une fusée d'essieu de véhicule, un manchon-amortisseur (12) étant disposé entre la broche-guide (6) et l'ouverture de passage (4), **caractérisé en ce qu'**un manchon (20) est disposé sous résistance de friction sur la broche-guide (6) de sorte que la broche-guide (6) soit fixée relatif à l'ouverture de passage (4) prévue dans le bâti de frein (2).

2. Mécanisme à retenue de positionnement et de transport selon la revendication 1, **caractérisé en ce que** le manchon (20) disposé entre la broche-guide (6) et le manchon-amortisseur (12) s'appuie avec l'une de sesextrémités sur une marche (22) du manchon-amortisseur (12).

3. Mécanisme à retenue de positionnement et de transport selon les revendications 1 ou 2, **caractérisé en ce que** la longueur du manchon (20) est dimensionnée de sorte qu'elle couvre complètement la section de la broche-guide (6) faisant saillie du manchon-amortisseur (12).

4. Mécanisme à retenue de positionnement et de transport selon l'une des revendications précédentes, **caractérisé en ce que** le manchon (20) est formé de carton ou de matières plastiques.
